# EUROPÄISCHE PATENTANMELDUNG

(11) **EP 0 823 803 A1**
(43) Veröffentlichungstag der Anmeldung: **11.02.1998**
(21) Anmeldenummer: 96112872.5
(22) Anmeldetag: 09.08.1996
(51) Int. Cl.: H04L 12/28, H04L 12/22, H04L 29/06

(54) **Einrichtung zum Zugriff auf ein an ein lokales Netzwerk angeschlossenes Gerät über ein öffentliches Netzwerk**

(71) Anmelder: Landis & Gyr Technology Innovation AG, 6301 Zug (CH)
(72) Erfinder: Copley, Jonathan Miles, 6330 Cham (CH); Skipper, Philip Robert, 6318 Walchwil (CH)

(57) **Zusammenfassung**

Eine Einrichtung zum Zugriff auf ein an ein lokales Netzwerk (5) angeschlossenes Gerät (2.1; 2.2; 2.3) über ein an einem öffentliches Netzwerk (6) angeschlossene Station (10; 9; 4) weist eine Schnittstelleneinrichtung (1) auf, über die das Gerät (2.1; 2.2; 2.3) für einen Datenaustausch zugreifbar ist, wobei die Schnittstelleneinrichtung (1) Mittel zur Interpretierung und zur Ausführung eines Befehles aufweist, der über die am öffentlichen Netzwerk angeschlossene Station (10; 9; 4) auslösbar ist und durch den die Funktionalität des Gerätes (2.1; 2.2; 2.3) steuerbar oder programmierbar ist oder durch den Daten des Gerätes (2.1; 2.2; 2.3) abfragbar sind. Die Schnittstelleneinrichtung (1) umfasst zudem Mittel zur Prüfung der Authentizität des Befehles. Die Einrichtung erlaubt die sichere Fernprogrammierung insbesondere auch von Geräten bzw. Teilen einer Anlage über ein öffentliches Netzwerk (6), wobei beispielhaft Heizungs-, Lüftungs- und Klimaanlagen, Zutritts- und Feuerüberwachungssysteme oder allgemein Gebäudeautomatisationsanlagen - die auch als Gebäudeleitsysteme bezeichnet werden - genannt seien.

## Beschreibung

Die Erfindung bezieht sich auf eine Einrichtung gemäss dem Oberbegriff des Anspruchs 1.

Solche Einrichtungen eignen sich beispielsweise zur Fernprogrammierung von Geräten zur Steuerung oder Regelung von Klimagrössen eines Raumes über ein öffentliches Datennetzwerk oder allgemein zum Datenaustausch zwischen einer an einem öffentlichen Datennetzwerk angeschlossenen Station und einem über das öffentliche Datennetzwerk zugreifbaren Gerät.

Es ist eine Einrichtung dieser Art bekannt (WO 9605681 A1), bei der eine an einem lokalen Datennetz angeschlossene Datenbasis über einen Server von einer an einem öffentlichen Datennetz angeschlossenen Station aus über das öffentliche Datennetz zugreifbar ist.

Es sind auch Einrichtungen und Verfahren bekannt (EP 686 905 A1 oder EP 693 836 A1), durch welche die Authentizität eines Datentransfers in einem öffentlichen Datennetz sichergestellt werden können.

Der Erfindung liegt die Aufgabe zugrunde, eine Einrichtung zu schaffen, mit der die Funktionalität eines Gerätes von einer Station aus über ein öffentliches Netzwerk - beispielsweise über das Internet - mit der erforderlichen Sicherheit programmierbar ist und mit der Daten des Gerätes über das öffentliche Netzwerk sicher übertragbar und auf der Station darstellbar sind.

Die genannte Aufgabe wird erfindungsgemäss durch die Merkmale des Anspruchs 1 gelöst. Vorteilhafte Ausgestaltungen ergeben sich aus den abhängigen Ansprüchen.

Nachfolgend werden Ausführungsbeispiele der Erfindung anhand der Zeichnung näher erläutert.

Es zeigen:
- Fig. 1: eine Einrichtung mit Geräten, deren Funktionalität von verschiedenen Stationen aus über ein öffentliches Netz steuerbar ist,
- Fig. 2: eine Schnittstelleneinrichtung für ein steuerbares Gerät,
- Fig. 3: eine Einheit der Schnittstelleneinrichtung,
- Fig. 4: ein Datenflussdiagramm zur Einrichtung,
- Fig. 5: der Datenfluss einer ersten Variante der Einrichtung,
- Fig. 6: der Datenfluss einer zweiten Variante der Einrichtung,
- Fig. 7: der Datenfluss einer dritten Variante der Einrichtung und
- Fig. 8: eine Variante der Schnittstelleneinrichtung.

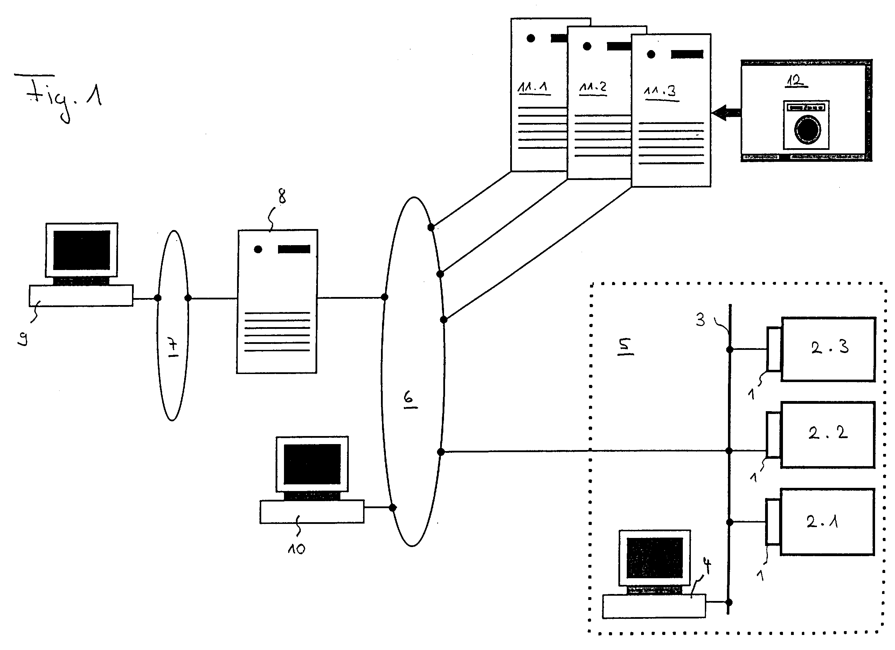

In der Fig. 1 bedeutet 1 eine Schnittstelleneinrichtung für ein Gerät 2, welches typischerweise eine Einrichtung 2.1 zur Steuerung oder Regelung einer Klimagrösse eines Raumes oder eines Gebäudes oder dann ein Videorecorder 2.2 oder eine Waschmaschine 2.3 ist.

In einem vorteilhaften Aufbau der Einrichtung ist das Gerät 2 bzw. 2.1, 2.2 oder 2.3 durch die Schnittstelleneinrichtung 1 an einem Kommunikationsmedium 3 angeschlossen, das vorteilhafterweise auch mit einem Terminal 4 verbunden ist. Das Kommunikationsmedium 3, das Terminal 4 und die Ausführungen 2.1, 2.2 und 2.3 des Gerätes 2 bilden ein lokales Datenkommunikationsnetzwerk 5. Das Kommunikationsmedium 3 des lokalen Datenkommunikationsnetzwerkes 5 ist typischerweise ein Hausbus. Im allgemeinen ist das Kommunikationsmedium 3 eine Drahtverbindung oder eine drahtlose Verbindung.

Das Terminal 4 ist vorzugsweise ein Personalcomputer.

Das lokale Datenkommunikationsnetzwerk 5 ist mit einem öffentlichen Datenkommunikationsnetz 6 verbunden. Typischerweise ist mindestens ein weiteres lokales Datenkommunikationsnetz 7 über einen Kommunikationscomputer 8 mit dem öffentlichen Datenkommunikationsnetz 6 verbunden, wobei am Datenkommunikationsnetz 7 wenigstens ein weiteres Terminal 9 angeschlossen ist.

Die Schnittstelleneinrichtung 1 ist mit Vorteil so ausgestaltet, dass das Gerät 2 bzw. 2.1, 2.2 oder 2.3 sowohl vom Terminal 4 des lokalen Datenkommunikationsnetzwerkes 5 als auch vom Terminal 9 des weiteren lokalen Datenkommunikationsnetzes 8 oder von einer beliebigen am öffentlichen Datenkommunikationsnetzwerk 6 angeschlossenen Station 10 aus für einen sicheren Datenaustausch zugreifbar ist.

Mit Vorteil ist über das öffentliche Datenkommunikationsnetzwerk 6 mindestens eine weitere Computereinheit 11.1, 11.2 oder 11.3 erreichbar, auf der eine dem Gerät 2, 2.1, 2.2 oder 2.3 zugeordnete Datenbasis 12 abgespeichert ist, wobei Daten der Datenbasis 12 mindestens auszugsweise in einem Ausgabefenster bzw. Window auf dem Terminal 4 oder 9 und auch auf der Station 10 darstellbar sind.

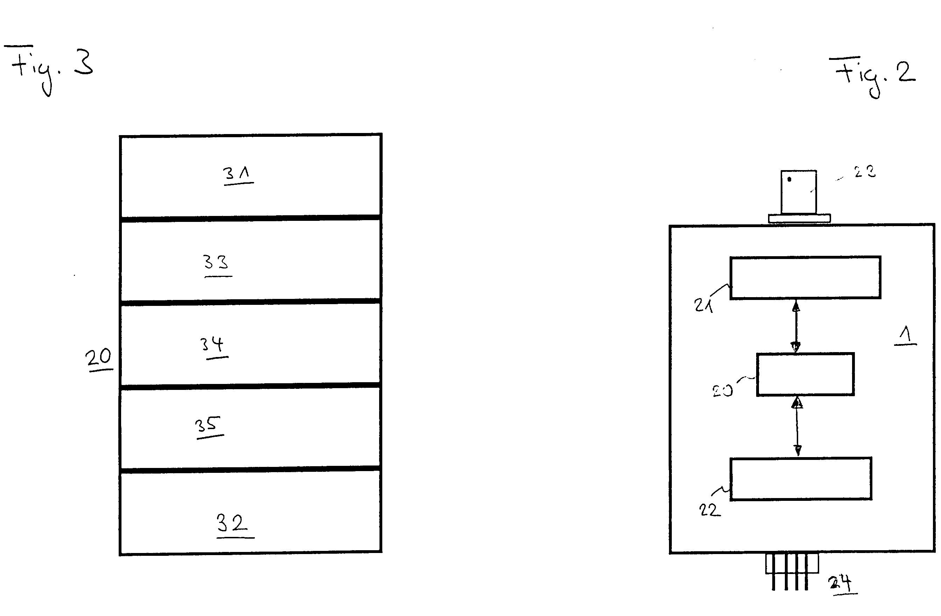

Die Schnittstelleneinrichtung 1 weist ein Sicherheitsmodul 20 (Fig. 2) auf, welches vorteilhafterweise mit einem ersten Kommunikationsmodul 21 und einem zweiten Kommunikationsmodul 22 verbunden ist, wobei das erste Kommunikationsmodul 21 mindestens ein Teil der Schnittstelle zwischen dem Sicherheitsmodul 20 und dem Kommunikationsmedium 3 und das zweite Kommunikationsmodul 22 mindestens ein Teil der Schnittstelle zwischen dem Sicherheitsmodul 20 und dem Gerät 2 bzw. 2.1, 2.2 oder 2.3 ist.

Sofern das Kommunikationsmedium 3 ein elektrischer Leiter ist, weist die Schnittstelleneinrichtung 1 zudem ein entstprechendes Steckerelement 23 zum Anschliessen der Schnittstelleneinrichtung 1 an das Kommunikationsmedium 3 (Fig. 1) auf. Die Schnittstelleneinrichtung 1 ist typischerweise über ein weiteres Steckerelement 24 mit dem Gerät 2 bzw. 2.1, 2.2 oder 2.3 verbindbar. Bei Bedarf ist die Schnittstelleneinrichtung 1 jedoch nicht galvanisch über das weitere Steckerelement 24, sondern auf eine andere Art, beispielsweise über einen modulierbaren Lichtstrahl mit dem Gerät 2 bzw. 2.1, 2.2 oder 2.3 koppelbar.

Die Art der Kommunikationsmodule 21 und 22 ist selbstverständlich auf die eingesetzten Übertragungsprotokolle und die verwendeten Übertragungsmittel abgestimmt. Das erste Kommunikationsmodul 21 ist beispielsweise ein elektronischer Baustein zur Durchführung des Protokolls TCP/IP (Transmission Control Protocol/Internet Protocol) während das zweite Kommunikationsmodul 22 beispielsweise ein elektronischer Baustein zur Durchführung des Übertragungsprotokolls des sogenannten PROFIBUS (Process Field Bus; DIN 19 245) ist.

Mit Vorteil umfasst das Sicherheitsmodul 20 erste Mittel 31 (Fig. 3) zur Bedienung des ersten Kommunikationsmoduls 21 (Fig. 2), zweite Mittel 32 (Fig. 3) zur Bedienung des zweiten Kommunikationsmoduls 22 (Fig. 2), dritte Mittel 33 (Fig.3) zur Decodierung einer Netzwerkadresse, vierte Mittel 34 zur Verschlüsselung und Entschlüsselung von Daten und fünfte Mittel 35 zur Interpretierung und Ausführung von Befehlen, welche an das mit der Schnittstelleneinrichtung 1 verbundene Gerät 2 bzw. 2.1, 2.2 oder 2.3 gerichtet sind.

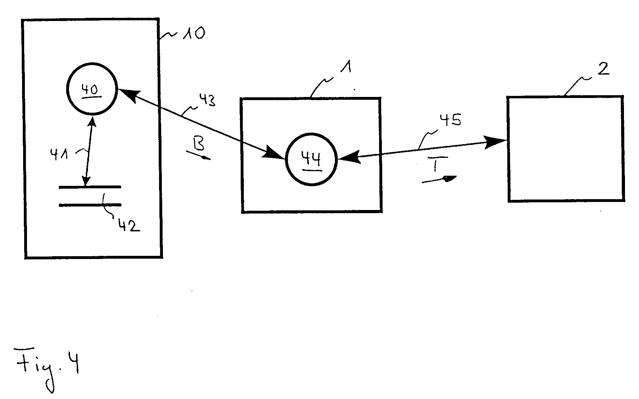

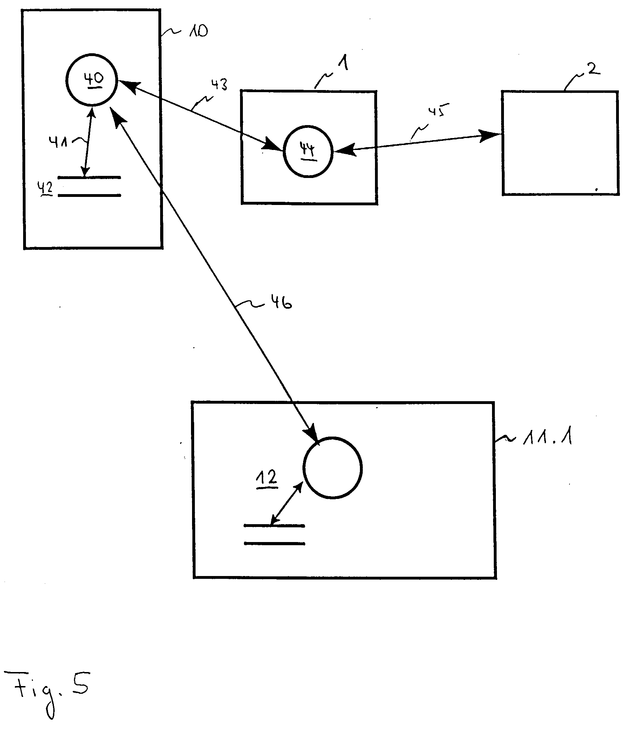

In Fig. 4, Fig. 5, Fig. 6 und Fig. 7 sind die wesentlichen Datenflüsse zwischen der Station 10, der Schnittstelleneinrichtung 1 und dem Gerät 2 dargestellt, wobei in Fig. 5 bis Fig. 7 auch die auf der Computereinheit 11.1 oder 11.2 oder 11.3 (Fig. 1) verwirklichte Datenbasis 12 einbezogen ist.

In der für Fig. 4 bis Fig. 7 gewählten, aus der Literatur bekannten Darstellungsart für Datenflussdiagramme (dazu beispielsweise D. J. Hatley, I. A. Pirbhai: Strategies for Real-Time System Specification, Dorset House, NY 1988) bedeutet ein Kreis eine Aktivität, ein Viereck allgemein ein System und ein Pfeil einen Kanal zur Übertragung von Daten und/oder Ereignissen, wobei eine Pfeilspitze in die wesentliche Datenflussrichtung zeigt. Ein Datenspeicher, der allgemein mehreren Aktivitäten zur Verfügung steht, ist durch zwei gleich lange, parallele Linien dargestellt. Mit dem Begriff Datenspeicher wird hier eine Einrichtung zur Speicherung von Daten bezeichnet, welche auch Mittel zur Verhinderung von Konflikten bei zeitlich parallelem Zugriff mehrerer Aktivitäten auf die Daten aufweist. Im weiteren ist beispielsweise eine Anordnung aus zwei durch einen Kanal verbundenen Aktivitäten mit einer einzigen Aktivität, welche alle Aufgaben der besagten beiden Aktivitäten erfüllt, äquivalent. Eine Aktivität ist allgemein in mehrere über Kanäle und/oder Datenspeicher verbundene Aktivitäten zerlegbar. Weitere in der Literatur der Datenflussdiagramme benutzte Bezeichnungen sind "Terminator" für das angrenzende System, "Process" oder "Task" für die Aktivität, "Data Flow" oder "Channel" für den Kanal und "Pool" oder "Data Pool" für den Datenspeicher.

Eine Aktivität kann als elektronische Schaltung oder auch softwaremässig als Prozess, Programmstück oder Routine verwirklicht werden, wobei die Aktivität bei einer softwaremässigen Ausführung auch die Zielhardware umfasst.

Die Station 10 weist eine erste Aktivität 40 sowie mit Vorteil einen über einen Kanal 41 mit der ersten Aktivität 40 verbundenen ersten Datenspeicher 42 zur Speicherung von Information für kryptographische Methoden auf.

Ein durch einen Bediener der Station 10 eingegebener Befehl B für das Gerät 2, wird von der ersten Aktivität 40 mit bekannten kryptographische Methoden verschlüsselt über einen Kanal 43 an eine zweite, in der Schnittstelleneinrichtung 1 verwirklichte Aktivität 44 übermittelt, wobei der Kanal 43 über das öffentliche Datenkommunikationsnetz 6 (Fig. 1) aufgebaut wird. Der an die zweite Aktivität 44 übermittelte Befehl B wird interpretiert und ausgeführt, indem die zweite Aktivität 44 ein gewisses auf Eigenschaften des Gerätes 2 abgestimmtes Datentelegramm T aufbereitet und über einen Kanal 45 an das Gerät 2 übermittelt. Bei Bedarf wird eine Antwort des Gerätes 2 auf das Datentelegramm T über den Kanal 45 an die Schnittstelleneinrichtung 1 und von da über den Kanal 43 an die Station 10 übermittelt.

Zum Schutz gegen allfälligen Missbrauch werden die zwischen der Station 2 und der Schnittstelleneinrichtung 1 ausgetauschten Daten im öffentlichen Datenkommunikationsnetzwerk 6 mit Vorteil derart verschlüsselt übertragen, dass auch die Authentizität der Daten gesichert ist. Durch die Funktionalität des Sicherheitsmodules 20, welche insbesondere mit den ersten Mitteln 31 (Fig. 3) und den zweiten Mitteln 32 die Codierung/Decodierung von Protokollen und mit den Mitteln 34 kryptographische Verfahren zur Übertragung von Daten über das öffentliche Datenkommunikationsnetzwerk 6 umfasst ist ein hoher Sicherheitsstandard für die Fernbedienung erreichbar.

Für eine bedienerfreundliche Benutzerführung auf der Station 10 ist die über das öffentliche Datenkommunikationsnetzwerk 6 (Fig. 1) verfügbare Datenbasis 12 einsetzbar.

In der Datenbasis 12 sind wesentliche Daten zur Bedienung, Programmierung und Steuerung des Gerätes 2 bzw. 2.1 bzw. 2.2 bzw. 2.3 abgespeichert. Die Datenbasis wird beispielsweise durch den Hersteller des Gerätes 2 bzw. 2.1 bzw. 2.2 bzw. 2.3 im öffentlichen Datenkommunikationsnetzwerk 6 eingerichtet und Benutzern des Gerätes 2 bzw. 2.1 bzw. 2.2 bzw. 2.3 die Fernbedienung zur Verfügung gestellt.

In einer vorteilhaften Ausgestaltung der Datenbasis 12 sind die zur Bedienung, Programmierung und Steuerung des Gerätes 2 bzw. 2.1 bzw. 2.2 bzw. 2.3 notwendigen Daten von der Station 10 aus in übersichtlicher Form einsichtbar und bei Bedarf durch den Benutzer der Station 10 veränderbar. Falls das öffentliche Datenkommunikationsnetzwerk 6 das Internet ist, ist mindestens ein Teil der Datenbasis mit Vorteil als sogenannte Web-Site verfügbar.

In einer ersten Variante (Fig. 5) der Einrichtung wird von der ersten Aktivität 40 aus ein Kanal 46 über das öffentliche Datenkommunikationsnetzwerk 6 zur Datenbasis 12 aufgebaut. Durch die über den Kanal 46 verfügbare Datenbasis 12 wird eine bedienungsgerechte Benutzerführung auf der Station 10 ermöglicht. Die zwischen der Station 10 und dem Gerät 2 aufbaubaren Kanäle 43 und 45 sind bidirektional, so dass auch aktuelle Gerätedaten auf der Station 10 abbildbar sind.

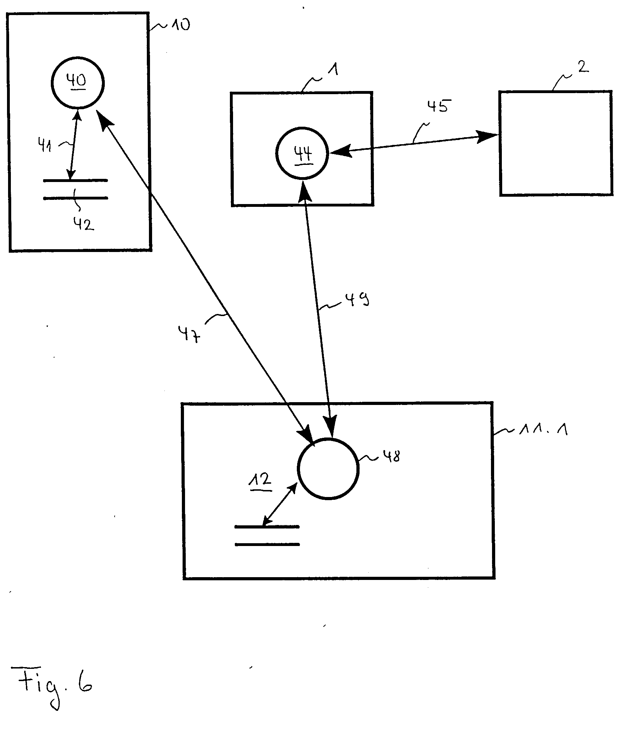

In einer zweiten Variante (Fig. 6) der Einrichtung wird von der ersten Aktivität 40 aus ein Kanal 47 über das öffentliche Datenkommunikationsnetzwerk 6 zur Datenbasis 12 aufgebaut. Ein von der Station 10 an die Datenbasis 12 übertragener Befehl zur Bedienung, Programmierung oder Steuerung des Gerätes 2 bzw. 2.1 bzw. 2.2 bzw. 2.3 wird durch eine der Datenbasis 12 zugeordnete Aktivität 48 aufbereitet und über einen weiteren Kanal 49 an die Schnittstelleneinrichtung 1 und von da an das Gerät 2 übertragen, wobei die Kanäle 47, 49 und 45 bidirektional sind, so dass auch aktuelle Gerätedaten auf der Station 10 abbildbar sind.

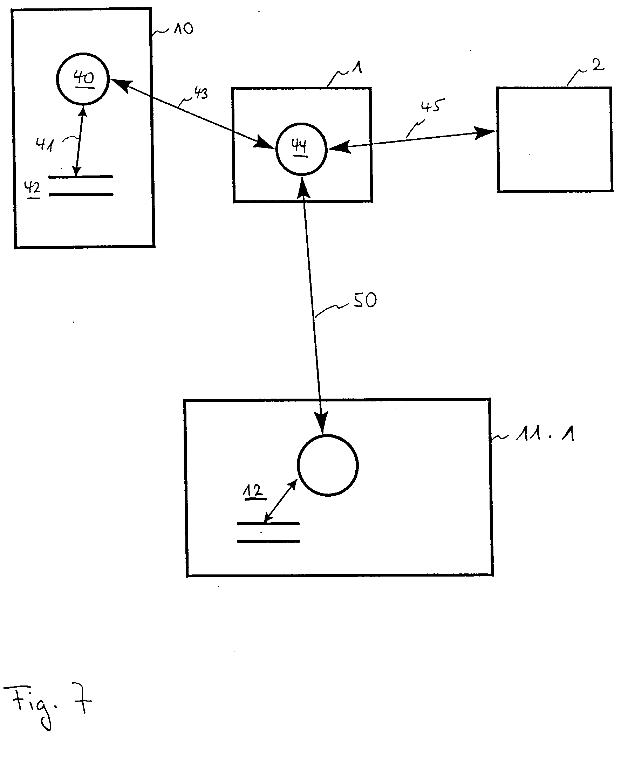

In einer dritten Variante (Fig. 7) der Einrichtung wird eine bedienungsgerechte Benutzerführung auf der Station 10 dadurch ermöglicht, dass die in der Schnittstelleneinrichtung 1 verwirklichte zweite Aktivität 44 einen Kanal 50 zur Datenbasis 12 aufbaut.

Statt der in Fig. 5, Fig. 6 und Fig. 7 dargestellten Station 10 sind zur Bedienung, Programmierung und Steuerung des Gerätes 2 bzw. 2.1 bzw. 2.2 bzw. 2.3 selbstverständlich auch das Terminal 4 (Fig. 1) und das weitere Terminal 9 einsetzbar.

Die Schnittstelleneinrichtung 1 mit dem Sicherheitsmodul 20 ermöglicht eine sichere, kostengünstige und benutzerfreundliche Fernbedienung, Fernprogrammierung und Fernsteuerung des Gerätes 2 bzw. 2.1 bzw. 2.2 bzw. 2.3 über das öffentliche Datenkommunikationsnetzwerk 6. Im Sicherheitsmodul 20 ist als hochintegrierter Baustein herstellbar. Das Sicherheitsmodul 20 ist vollständig als sogenannter Hardware-Chip verwirklichbar, wodurch die erreichbare Sicherheit wesentlich erhöht werden kann.

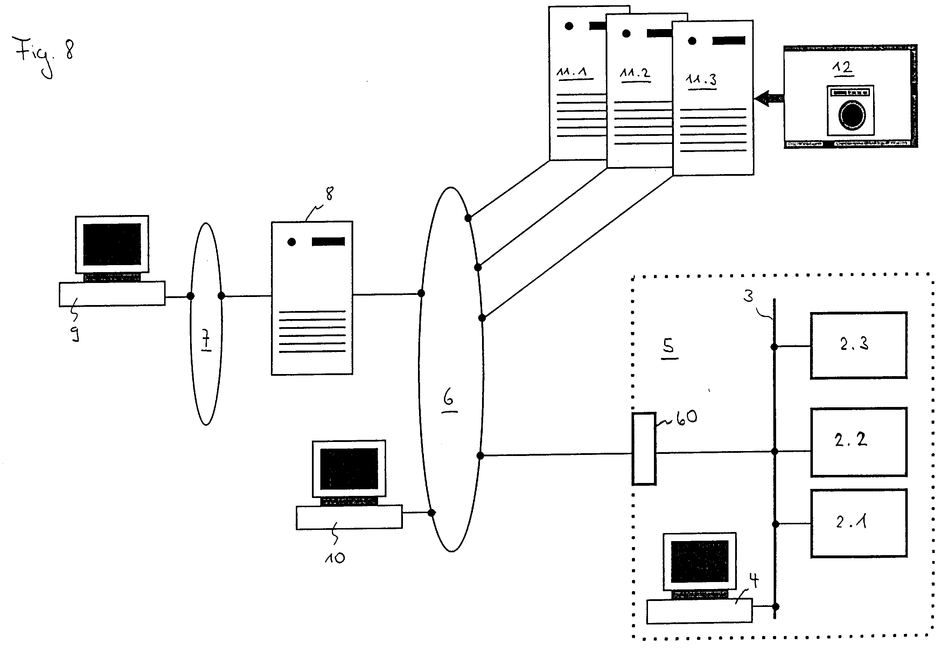

In der Fig. 8 ist mit 60 eine Ausführungsvariante der Schnittstelleneinrichtung 1 (Fig. 1) bezeichnet. Die Ausführungsvariante 6 weist grundsätzlich die in der Fig. 3 dargestellte Funktionalität auf, ist jedoch derart aufgebaut, dass sie funktional zwischen das öffentliche Datenkommunikationsnetzwerk 6 und das lokale Datenkommunikationsnetzwerk 5 einfügbar ist. Die Ausführungsvariante 60 der Schnittstelleneinheit ist insbesondere dann vorteilhaft, wenn die zu bedienenden Geräte 2 bzw. 2.1, 2.2 und 2.3 des lokalen Datenkommunikationsnetzwerkes 5 gleichartige Bedienkonzepte aufweisen.

Die vorgeschlagene Einrichtung mit der Schnittstelleneinrichtung 1 bzw. 60 zum Zugriff auf das Gerät 2 erlaubt die sichere Fernprogrammierung insbesondere auch von Geräten bzw. Teilen einer Anlage, wobei beispielhaft Heizungs-, Lüftungs- und Klimaanlagen, Zutritts- und Feuerüberwachungssysteme oder allgemein Gebäudeautomatisationsanlagen - die auch als Gebäudeleitsysteme bezeichnet werden - genannt seien.

## Patentansprüche

1. Einrichtung zum Zugriff auf ein an ein lokales Netzwerk (5) angeschlossenes Gerät (2.1; 2.2; 2.3) über ein an einem öffentliches Netzwerk (6) angeschlossene Station (10; 9; 4), wobei das lokale Netzwerk (5) mit dem öffentlichen Netzwerk (6) verbunden ist,
**gekennzeichnet durch**
eine Schnittstelleneinrichtung (1; 60), über die das Gerät (2.1; 2.2; 2.3) für einen Datenaustausch zugreifbar ist, wobei die Schnittstelleneinrichtung (1; 60) Mittel (35) zur Interpretierung und zur Ausführung eines Befehles aufweist, der über die am öffentlichen Netzwerk angeschlossene Station (10; 9; 4) auslösbar ist und durch den die Funktionalität des Gerätes (2.1; 2.2; 2.3) steuerbar oder programmierbar ist oder durch den Daten des Gerätes (2.1; 2.2; 2.3) abfragbar sind und
wobei die Schnittstelleneinrichtung (1; 60) zudem Mittel (34) zur Prüfung der Authentizität des Befehles aufweist.

2. Einrichtung nach Anspruch 1, **dadurch gekennzeichnet,**
dass die Schnittstelleneinrichtung (1; 60) und die Station (10; 9; 4) Mittel (40, 42; 34) zur Verschlüsselung und Entschlüsselung von Daten aufweisen, so dass ein zwischen der Station (10; 9; 4) und der Schnittstelleneinrichtung (1) über das öffentliche Netzwerk (6) übertragener Datenstrom verschlüsselbar ist.

3. Einrichtung nach einem der vorangehenden Ansprüche, **dadurch gekennzeichnet**,
dass eine über das öffentliche Netzwerk (6) zugreifbare Datenbasis (12) verfügbar ist, welche Daten zur Führung eines Bedieners der Station (10; 9; 4) aufweist.

4. Einrichtung nach einem der vorangehenden Ansprüche, **dadurch gekennzeichnet**,
dass ein von der Schnittstelleneinrichtung (1; 60) interpretierbare Befehlssatz in einer über das öffentliche Netzwerk (6) zugreifbaren Datenbasis (12) verfügbar ist.

5. Einrichtung nach einem der vorangehenden Ansprüche, **dadurch gekennzeichnet**,
dass die Schnittstelleneinrichtung (1; 60) Mittel (21, 31) zur Codierung/Decodierung eines Protokolls zur Übertragung von Daten über das öffentliche Netzwerk (6) aufweist.

6. Einrichtung nach einem der vorangehenden Ansprüche, **dadurch gekennzeichnet**,
dass die Schnittstelleneinrichtung (1; 60) Mittel (22, 32) zur Kommunikation mit dem Gerät (2.1; 2.2; 2.3) aufweist.

7. Einrichtung nach einem der vorangehenden Ansprüche, **dadurch gekennzeichnet**,
dass das Gerät (2.1) eine Einrichtung zur Steuerung oder Regelung von Klimagrössen eines Raumes ist.

8. Einrichtung nach einem der vorangehenden Ansprüche, **dadurch gekennzeichnet,**
dass die Schnittstelleneinrichtung (1) zwischen das Kommunikationsmedium (3) und das Gerät (2.1; 2.2; 2.3) geschaltet ist.

9. Einrichtung nach einem der vorangehenden Ansprüche, **dadurch gekennzeichnet,**
dass die Schnittstelleneinrichtung (60) zwischen das lokale Kommunikationsnetzwerk (5) und das öffentliche Datenkommunikationsnetz (6) geschaltet ist.
